# DEMANDE DE BREVET EUROPEEN

(11) **EP 1 494 489 A1**
(43) Date de publication de la demande: **05.01.2005**
(21) Numéro de dépôt: 04364046.5
(22) Date de dépôt: 30.06.2004
(51) Int. Cl.: H04Q 7/32, H04M 1/22, H05B 33/08

(54) **Dispositif de radiocommunication comprenant au moins une source lumineuse contrôlée par un signal numérique**

(30) Priorité: 30.06.2003 FR 0307926
(71) Demandeur: WAVECOM, F-92442 Issy-les-Moulineaux Cedex (FR)
(72) Inventeur: Lemeur, Philippe, 29900 Concarneau (FR); Robichon, Ludovic, 49280 Saint Christophe du Bois (FR)
(74) Mandataire: Bioret, Ludovic

(57) **Abrégé**

L'invention concerne un dispositif de radiocommunication comprenant au moins une source lumineuse (11, 213) pour indiquer au moins deux états distincts du dispositif, et dont la luminosité varie selon des rythmes différents selon les états. Dans au moins un premier des états, la source lumineuse est contrôlée par un signal numérique (30, 70) sensiblement périodique alimentant des moyens d'intégration (200, 201, 202, 54, 601, 602, 603, 604, 80, 82) qui lui sont connectés.

## Description

### Domaine de l'invention.

La présente invention se rapporte au domaine des radiocommunications, notamment des terminaux de communication mobile et des radio-téléphones (par exemple de type GSM de l'anglais « Global System for Mobile communication » ou « Système global pour les communications mobiles » ou UMTS de l'anglais « Universal Mobile Telecommunication System » ou « système de télécommunication mobile universel »).

Plus précisément, l'invention concerne une indication de l'état de veille du terminal (notamment en veille ou actif) de façon visuelle de cette indication.

### Etat de la technique.

Selon l'état de l'art, il existe déjà des diodes clignotantes sur les radiotéléphones, qui clignotent pour indiquer qu'ils sont en fonctionnement. Un inconvénient des techniques antérieures est qu'elles ne permettent pas de faire varier le rythme de clignotement

Il faut donc alimenter régulièrement et périodiquement la diode pour donner le rythme de clignotement.

### Objectifs et principes généraux de l'invention.

L'invention selon ses différents aspects a notamment pour objectif de pallier ces inconvénients de l'art antérieur.

Plus précisément, un objectif de l'invention est de fournir une technique efficace et ergonomique de restitution visuelle d'une information représentative de l'état d'un dispositif de radiocommunication.

Un autre objectif de l'invention est de fournir une telle technique nécessitant une sommation réduite et notamment ne nécessitant pas l'utilisation d'une modulation PWM (de l'anglais « Pulse Width Modulation » ou « modulation en largeur d'impulsion »), et plus généralement de systèmes requérant de la puissance.

Un objectif de l'invention est ainsi d'augmenter fortement l'autonomie des terminaux possédant un indicateur d'état lumineux.

Un autre objectif de l'invention est de permettre un affichage variable avec notamment une intensité qui peut augmenter et/ou diminuer doucement, cet affichage variable étant particulièrement souple et relativement simple à mettre en oeuvre.

Dans ce but, l'invention propose un dispositif de radiocommunication comprenant au moins une source lumineuse pour indiquer au moins deux états distincts du dispositif, et dont la luminosité varie selon des rythmes différents selon les états, remarquable en ce que, dans au moins un premier des états, la source lumineuse est contrôlée par un signal numérique sensiblement périodique alimentant des moyens d'intégration connectés à la source lumineuse.

Un dispositif de radiocommunication est ici notamment un terminal de télécommunication mobile (par exemple de type UMTS ou GSM), un terminal de téléphonie sans fil (DECT en particulier), un terminal de type PDA (de l'anglais « Personal Digital Assistant » ou « Assistant Numérique Personnel ») ou un composant (notamment un circuit intégré ou une puce électronique) ou une carte électronique destinée à équiper de tels terminaux.

Selon une caractéristique particulière, le dispositif de radiocommunication est remarquable en ce que le premier état est un état de veille, nécessitant une faible consommation d'énergie.

Ainsi, l'invention permet une grande autonomie en diminuant la consommation notamment lorsque le dispositif n'est pas dans un mode de communication.

Selon une caractéristique particulière, le dispositif de radiocommunication est remarquable en ce que le signal numérique sensiblement périodique est un signal carré.

Selon une caractéristique particulière, le dispositif de radiocommunication est remarquable en ce que le signal numérique change de valeur à chaque activation d'un réveil associé à un traitement effectué durant le mode veille.

Selon une caractéristique particulière, le dispositif de radiocommunication est remarquable en ce que le réveil est associé à un signal de « paging » reçu par le dispositif, lorsqu'il est en veille.

Ainsi, le signal numérique régulier utilise une ressource disponible (signal de « paging » émis régulièrement par une station de base vers les terminaux présents dans sa cellule) et change de valeur de manière optimale, lorsque le dispositif (bien qu'étant en mode veille) traite un signal extérieur durant des durées courtes, la synchronisation du réveil de « paging » et du signal numérique contribuant à l'économie d'énergie.

En outre, le signal de paging étant différent d'une cellule à l'autre, l'utilisateur peut ainsi identifier aisément un changement de cellule.

Selon une caractéristique particulière, le dispositif de radiocommunication est remarquable en en ce que les moyens d'intégration comprennent au moins une résistance et au moins une capacité formant un intégrateur.

Ainsi, les moyens d'intégration sont relativement simples à mettre en oeuvre et peuvent être adaptés aux caractéristiques de luminosité (notamment variation de l'intensité) désirées.

Selon une caractéristique particulière, le dispositif de radiocommunication est remarquable en ce que les moyens d'intégration comprennent deux circuits montés en parallèle comprenant chacun au moins une résistance et au moins une diode, les diodes étant montées en sens opposés dans les circuits, les circuits et au moins une capacité formant un intégrateur.

Ainsi, aussi bien la charge que la décharge du condensateur et donc l'augmentation et la diminution de l'intensité lumineuse (notamment leur variation et durée) sont contrôlées.

Selon une caractéristique particulière, le dispositif de radiocommunication est remarquable en ce que la période du signal numérique est supérieure ou égale à deux secondes.

Ainsi, l'utilisateur associe facilement l'éclairage de la source lumineuse variant à un rythme relativement lent, au premier état.

En outre, la variation d'intensité lumineuse est contrôlée.

Selon une caractéristique particulière, le dispositif de radiocommunication est remarquable en ce que les moyens d'intégration alimentent des moyens de conversion d'une tension en courant d'alimentation de la source lumineuse.

Ainsi, la consommation des moyens d'intégration est particulièrement faible.

Selon une caractéristique particulière, le dispositif de radiocommunication est remarquable en ce qu'un transistor à effet de champ et une résistance associée forment les moyens de conversion.

Selon une caractéristique particulière, le dispositif de radiocommunication est remarquable en ce que la source lumineuse comprend au moins une diode électroluminescente.

Selon une caractéristique particulière, le dispositif de radiocommunication est remarquable en ce que, dans au moins un second état, la source est contrôlée par des moyens de modulation de largeur d'impulsion (PWM).

Ainsi, dans un second état, la source lumineuse est contrôlée par un signal non régulier, ce qui permet de bien distinguer les différents états.

Selon une caractéristique particulière, le dispositif de radiocommunication est remarquable en ce que le signal numérique régulier et un signal pour la modulation de largeur d'impulsion sont multiplexés sur une même entrée.

En outre, l'invention permet ainsi d'optimiser les brochages entre les différents circuits en multiplexant les signaux générés en mode veille et en mode actif (PWM).

Selon une caractéristique particulière, le dispositif de radiocommunication est remarquable en ce que lorsque l'on passe dans un état où les moyens d'intégration ne sont pas utilisés, ces derniers sont isolés de la masse à l'aide d'un transistor.

Selon une caractéristique particulière, le dispositif de radiocommunication est remarquable en ce qu'il comprend au moins deux moyens d'intégration utilisables sélectivement, et/ou des moyens d'intégration programmables, de façon à modifier le rythme de variation de la luminosité.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un terminal de radiocommunication selon l'invention ;
- la figure 2 illustre schématiquement un circuit électronique mis en oeuvre dans le terminal de la figure 1 ;
- les figures 3 et 4 décrivent l'amplitude de signaux mis en oeuvre dans le terminal selon la figure 1;
- les figures 5, 6 et 8 présentent un schéma électronique selon des variantes de l'invention ; et
- la figure 7 illustre des amplitudes de signaux véhiculés dans le circuit électronique présenté en regard de la figure 6.

Le principe général de l'invention repose sur l'utilisation, en mode veille d'un terminal de radiocommunication d'un signal de commande régulier d'une source lumineuse numérique. Le signal de commande alimente des moyens d'intégration (par exemple basés sur un circuit capacitif et/ou à transistor). Préférentiellement, le signal de commande est issu d'un signal traité par le terminal durant le mode veille. Ainsi, lorsque le dispositif doit traiter un tel signal (par exemple, un signal de « paging »), les circuits électroniques sont activés durant un temps relativement court et permettent de changer la valeur du signal de commande tout en consommant très peu d'énergie.

### Description détaillée d'un mode de réalisation.

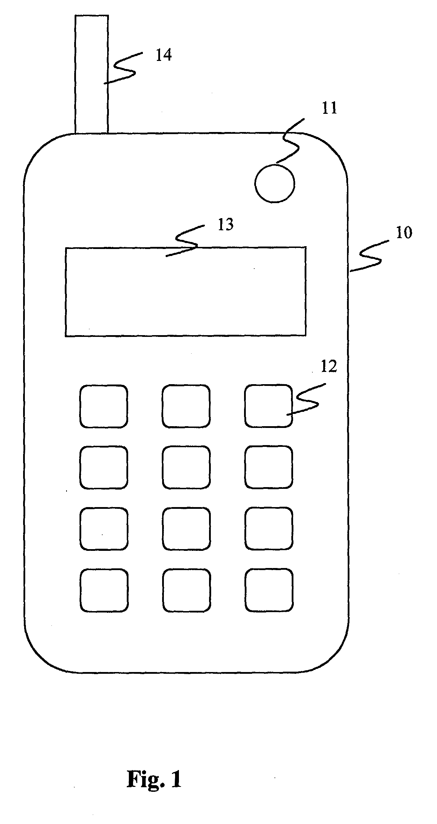

On présente, en relation avec la **figure 1**, un terminal 10 de radiocommunication selon un mode de réalisation particulier de l'invention.

Le terminal 10 est, par exemple, un terminal de type GSM, DECT, UMTS et plus généralement, de type fonctionnant sur batterie et possédant au moins deux modes de fonctionnement (notamment mode veille et mode(s) actif(s) ou communication).

Le terminal 10 comprend notamment :
- un boîtier ;
- une diode électroluminescente ou LED 11 ;
- un clavier 12 ;
- un écran 13 ;
- une antenne 14 ;
- des moyens de réception, d'émission et de traitement des signaux de radiocommunications ;
- des moyens de contrôle de la diode 11 ; et
- une batterie présentant à ses bornes une tension *Vbatt* de quelques volts (préférentiellement comprise entre 3 et 4,5V).

Selon l'invention, lorsque le terminal 10 est en mode communication, la diode 11 s'éclaire selon un rythme relativement rapide et/ou avec une intensité soutenue.

En revanche, lorsque le terminal 10 est en mode veille, la diode 11 s'éclaire selon un rythme plus lent (par exemple avec une fréquence variant de 0,5 à 2 secondes) et/ou en faisant varier l'intensité lentement entre deux valeurs extrêmes.

Préférentiellement, la LED 11 et ses moyens de contrôle sont alimentés avec la tension *Vbatt* prise directement sur la batterie. Selon une variante de l'invention, le terminal comprend des moyens pour réguler et stabilisé cette tension en fournissant, par exemple, une tension VCC de l'ordre de 2,8V alimentant la LED 11 et ses moyens de contrôle.

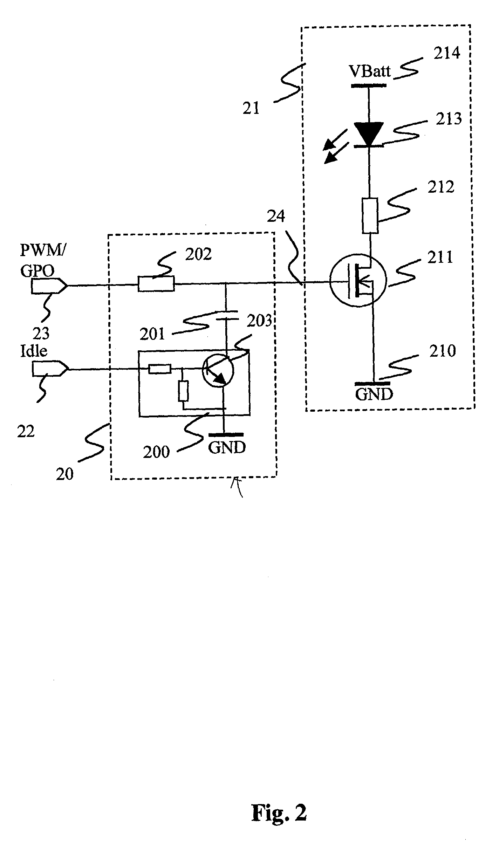

La **figure 2** présente les moyens de contrôle de la diode 11 mis en oeuvre sous forme électronique dans le terminal 10.

Les moyens de contrôle de la diode 11 comprennent notamment :
- un intégrateur 20 ; et
- une unité 21 associée à une diode électroluminescente ou LED 213.

L'intégrateur 20 accepte en entrée un signal *PWM-GPO* 23 et un signal *Idle* 22, présente en sortie un signal 24 et comprend :
- une résistance électrique 202 de 300kΩ reliée aux signaux 23 et 24 ;
- un composant 200 inverseur de type DTC144 comprenant essentiellement un transistor 203 et deux résistances et dont l'entrée est reliée au signal *Idle* 22, une borne associée à un émetteur du transistor est reliée à la masse et l'autre borne (émetteur du transistor) correspondant à la sortie du composant présente le signal 22 inversé ; et
- un condensateur 201 de 2,2 µF dont l'une des bornes est reliée au signal 24 et l'autre borne est reliée à la sortie du composant 200.

Le signal *PWM-GPO* 23 est généré par un composant chargé de transmettre et recevoir un signal radio de type GSM et de le traiter. Ce composant possède des ports GPO (de l'anglais « General Purpose Output » ou « sortie à usage général » en français qui permet de générer un signal numérique quelconque) et PWM (générant un signal de commande de type à modulation d'impulsion) avec une sortie GPO/PWM multiplexant les deux signaux en fonction d'une commande logicielle interne au composant et permettant de présenter sur cette sortie (et donc en entrée 23 de l'intégrateur 20) soit un signal numérique controllé (GPO), soit un signal PWM.

L'unité 21 est alimentée par la tension électrique *Vbatt* 214 fournie par la batterie du terminal 10 et comprend :
- la LED 213 ;
- une résistance électrique 212 de 270 kΩ ; et
- un transistor 211 à effet de champ ou FET (par exemple de type NMOS de référence TN0205 ® distribué par la société VISHAY ® (un FET NMOS étant commandé par une tension de niveau haut).

La LED 213 est reliée à l'une de ses bornes à la tension *Vbatt* et à l'autre de ses bornes à la résistance 212 qui, elle-même, est connectée au drain du transistor 211.

La grille et la source du transistor 211 sont reliées respectivement au signal 24 et à la masse.

Ainsi, le transistor 211 et la résistance 212 forment des moyens de conversion de la tension correspondant au signal 24 en un courant alimentant la LED 213.

Lorsque le terminal est en communication, le signal 22 est relié à la masse et le signal PWM-GPO 23 reçoit un signal selon une modulation PWM (de l'anglais « Pulse Width Modulation » ou « modulation en largeur d'impulsion »). La modulation PWM est basée sur une amplitude de signal généré variant en fonction des largeurs d'impulsions d'un signal de commande à deux états de type PWM qui permet de piloter la fréquence et la luminosité de la LED 213.

En revanche, lorsque le terminal est en mode veille, le signal 22 correspond à la tension électrique *Vbatt* et le transistor 203 est saturé et le signal PWM-GPO 23 est de type signal carré. Dans ce cas, l'intensité de la LED est contrôlée par un signal sensiblement triangulaire correspondant à l'intégration du signal PWM-GPO et contrôlant le transistor 211.

Ce montage tel qu'illustré en figure 2 permet de limiter la consommation d'énergie associée à la LED 213 notamment en mode veille.

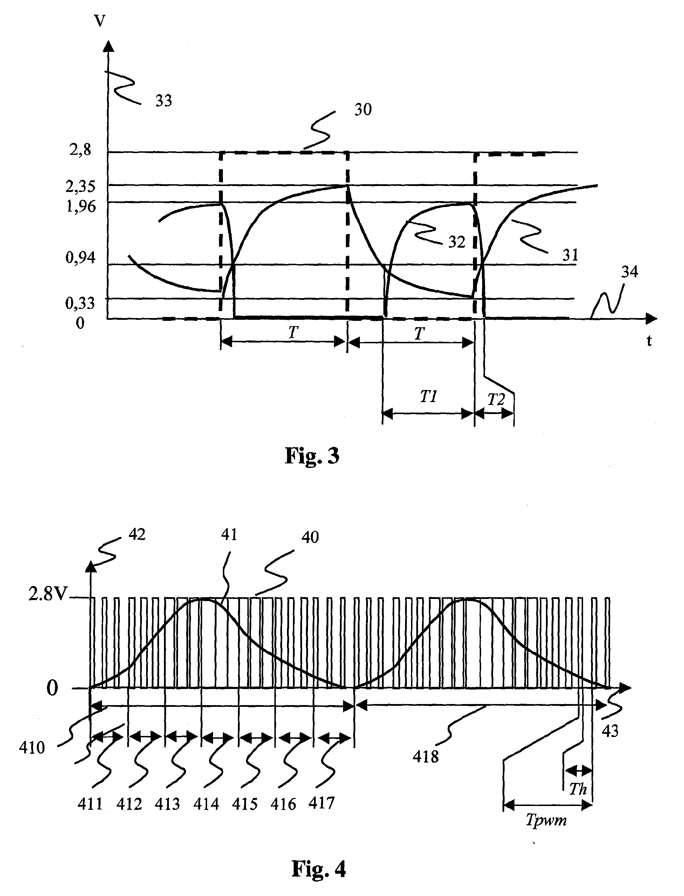

La **figure 3** illustre les amplitudes 33 de signaux présents dans le circuit de la figure 2 en fonction du temps 34 lorsque le signal 22 est relié à la tension *Vbatt*.

Plus précisément, les courbes 30, 31 et 32 illustrent respectivement les amplitudes des signaux 23, 24 et du signal de commande de la LED 213 lorsque le terminal 10 est en mode veille.

Le signal 23 représenté par la courbe 30 est un signal carré, périodique présentant, à chaque période, une tension nulle durant un temps *T* égal à 2,3 s et une tension égale à 2,8V durant la même durée *T*. Le signal 23 est généré par un ou une partie de logiciel spécifique fonctionnant dans le terminal en mode veille et utilisant une horloge lente, typiquement cadencée à 32 kHz. Ainsi, aucun signal d'horloge à haute fréquence (notamment 13 MHz) n'est utilisé, ce qui permet une consommation d'énergie relativement faible. De plus, il est facile d'ajuster et/ou de programmer la fréquence et la forme des signaux de commande.

Selon une variante de l'invention, en mode veille, le signal 23 est généré à partir d'un signal de synchronisation émis par le réseau, (« burst » (ou salve) de « paging ») qui est généralement détecté par le terminal 10, le signal 23 changeant d'état à chaque réception du burst de paging. Les signaux de paging étant émis de manière désynchronisée et à une fréquence différence d'une cellule de réseau à l'autre, la LED clignotera différemment lors d'une passage d'une cellule à l'autre et l'utilisateur pourra avantageusement constater un changement de cellule du terminal 10. Par ailleurs, si le terminal 10 ne perçoit pas de signal de paging pendant un temps relativement long, le terminal 10 n'étant pas dans une zone permettant de recevoir correctement ce signal, la LED sera mise dans un état éteint. Ainsi, cela permet d'économiser de l'énergie et d'indiquer de manière simple et ergonomique à l'utilisateur que le terminal 10 ne peut pas recevoir ou émettre de communication.

Le signal 23 est intégré par l'intégrateur 20 (et plus précisément la résistance 202 et la capacité 201) pour fournir le signal 24 représenté par la courbe 31. A chaque période, durant une durée *T*, le signal 31 qui est synchrone du signal 30 augmente progressivement d'une valeur basse égale à 0,33 mV à une valeur haute égale à 2,35V puis diminue progressivement durant la même durée *T* de la valeur haute à la valeur basse.

Le signal de commande de la LED 213 représenté par la courbe 32 correspond à la différence de potentiel aux bornes du transistor FET 211.

En mode veille établi, à chaque début de période correspondant à un passage à un niveau haut du signal 30, la LED 213 est éteinte et la tension 32 aux bornes du FET est maximale et vaut 1,96 V. Lorsque le signal 30 passe à 2,8 V, la tension 32 chute relativement vite jusqu'au voisinage de 0 V, le signal 31 étant à un niveau bas compris entre 0,33 et 0,94 V. Tant que le signal 31 a un niveau supérieur à 0,94 V, la LED 213 s'allume. Puis, dans la seconde moitié d'une période, lorsque le signal 31 diminue et devient inférieur à 0,94 V, le signal 32 augmente progressivement jusqu'à atteindre une tension égale à 1,96 V correspondant à l'intensité minimale de luminosité de la LED 213. La variation du signal 31 est relativement forte autour de 0,94V. Ainsi, l'éclairage de la LED 213 est peu sensible aux incertitudes sur le seuil, propres à chaque transistor à effet de champ 211, ce qui permet de faciliter une fabrication homogène de terminaux,. chacun des terminaux ayant, en mode veille, une LED qui s'allume sensiblement de la même manière toute chose égale par ailleurs.

Ainsi, durant une durée légèrement supérieure à la durée *T*, la LED 213 reste allumée. Puis, son intensité lumineuse diminue progressivement avant d'augmenter relativement vite. De cette manière, la LED 213 clignote doucement avec une période égale à *2T* soit 4,6 s et l'utilisateur du terminal 10 perçoit de manière très ergonomique le mode veille.

Bien entendu, selon des variantes de réalisation, les valeurs de la résistance 202 et du condensateur 203 de l'intégrateur peuvent être modifiées pour faire varier les vitesses de montée et de descente de la tension aux bornes du FET 211 et donc pour modifier les variations (en durée et intensité) de la LED 213.

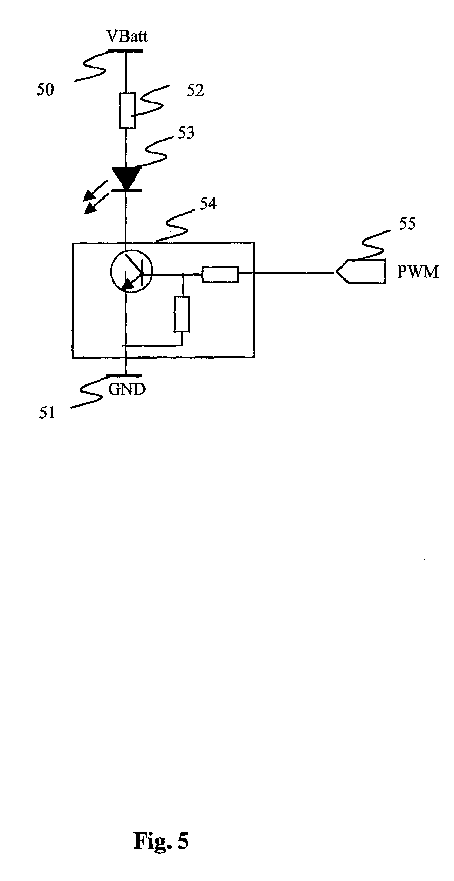

La figure 4 illustre l'amplitude 42 du signal pilotant la LED 213 associée à une commande 40 de type PWM en mode communication en fonction du temps 33 (c'est-à-dire lorsque le signal 22 est relié à la masse).

L'amplitude 42 du signal 41 pilotant la LED 213 et qui traverse la résistance 212 dépend directement du signal 24, ici de type PWM durant une communication correspondant au signal 40 représenté. La figure 4 présente deux cycles 410 et 418 durant lesquels la LED 213 s'allume puis s'éteint progressivement. Chacun des cycles est divisé en plusieurs étapes (étapes 411 à 417 pour le cycle 410). Durant chaque étape, le signal 24 PWM est de type carré et périodique : durant chaque période de largeur *Tpwm,* le signal est à un niveau haut correspondant à *Vbatt* durant une durée *Tpwm-Th,* puis à un niveau bas nul durant une durée *Th*.

Au début du cycle (étape 411), *Th* est relativement grand et l'amplitude de la LED 213 est donc faible. La durée *Th* augmente progressivement d'une étape à l'autre pour devenir maximale à l'étape 414 placée au milieu du cycle 410. Puis, la durée *Th* diminue au passage d'une étape à l'autre pour être minimale à l'étape 417.

Les cycles d'allumage de la LED 213 sont nettement plus rapides en mode communication qu'en mode veille. Ainsi, grâce notamment au rythme d'éclairage de la LED 213, un utilisateur peut facilement déterminer la nature du mode courant (veille ou communication).

Les moyens d'intégration 202 et 201 permettent de lisser la progression et/ou la diminution de l'intensité de la LED 213. Ainsi, les variations d'intensité de la LED sont lentes et permettent d'améliorer la perception du mode par un utilisateur.

### Variante des moyens de contrôle de la LED.

La **figure 5** illustre un mode de réalisation d'un circuit permettant un éclairage de LED basé sur une utilisation d'une modulation PWM.

Le circuit selon cette figure comprend :
- une résistance 52 de 330 Ω ;
- un composant 54 inverseur de type DTC144 similaire au composant 200 précédemment illustré ; et
- une LED 53 reliant la résistance 52 au transistor du composant 54.

Le composant 54 et la résistance ont, par ailleurs, une broche reliée respectivement à la masse 51 et à la tension 50 *Vbatt* fournie par une batterie.

En outre, un signal 55 de type PWM alimente le circuit 54 pour piloter l'intensité de la LED 53. La forme du signal 55 est similaire à celle du signal 40 présenté précédemment en regard de la figure 4, l'intensité de la LED variant elle-même selon le signal 41.

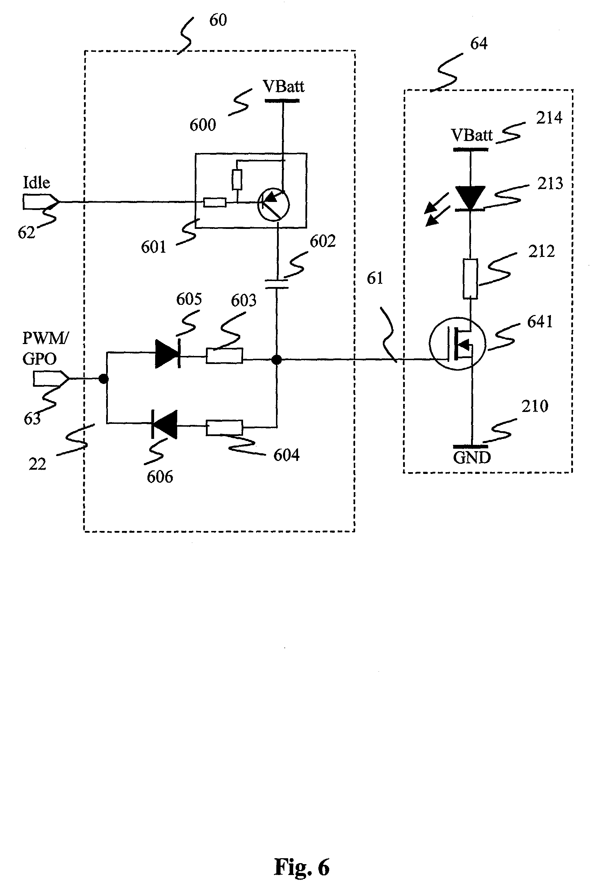

Le circuit illustré en regard de la figure 5 est utilisé en mode veille et/ou communication avec des cycles de longueur différente pour les deux modes. Néanmoins, il entraîne une consommation importante à chaque fois qu'on active le signal de commande (soit toutes les 0,5 à 2 secondes en mode veille afin d'obtenir un clignotement de diode satisfaisant) d'où une décharge rapide de la batterie du terminal, et donc une autonomie plus faible que les modes de réalisations illustrés en regard des figures 2 et 6.

La **figure 6** présente un schéma électronique de moyens de contrôle d'une diode 213 selon une variante de l'invention mise en oeuvre dans le terminal 10.

Les moyens de contrôle de la diode 11 comprennent notamment :
- un intégrateur 60 ; et
- une unité 64 associée à une LED 213.

L'unité 64 est similaire à l'unité 21 présentée en regard de la figure 2 et ne sera donc pas décrite davantage.

L'intégrateur 42 accepte en entrée des signaux de commande 62 et 63 similaires aux signaux respectivement 22 et 23 précédemment illustrés dans le circuit de la figure 2 et présente un signal de sortie 61. Il comprend notamment :
- un composant 601 de type DTA144EE (possédant une structure similaire au composant 200 et différant essentiellement par le type de transistor bipolaire à jonction PNP dans un cas et NPN dans l'autre cas) ;
- un condensateur 602 de 2,2 µF ; et
- deux branches comprenant chacune une diode respectivement 605 et 606 montées en sens opposé et une résistance respectivement 603 et 604 de 1 MΩ, les diodes 605 et 606 étant réliées au signal d'entrée 63 de type PWM en mode communication et GPO en mode veille et à la résistance correspondante elle-même connectée au condensateur 602.

Les première, deuxième et troisième bornes d'entrée du composant 601 sont reliées respectivement au signal de commande 62, au potentiel d'alimentation *Vbatt* fourni par la batterie du terminal et à une borne du condensateur 602. L'autre borne du condensateur 602 reliée aux résistances 603 et 604 et fournit le signal de commande 61 pilotant la grille du transistor 641.

Ainsi, en mode veille correspondant à un signal 62 relié à la masse, les résistances 604 et 603 permettent de contrôler respectivement la charge et la décharge du condensateur 602 permettant ainsi de fournir un signal 61 sensiblement triangulaire avec une période voisine de 5 secondes en fonction de l'amplitude du signal 63 carré de même période. Selon des variantes de l'invention, les valeurs des résistances 603 et 604 et de la capacité du condensateur 602 sont adaptées à d'autres valeurs de temps de charge et de décharge et donc des temps d'augmentation et de diminution de l'intensité de la LED 213.

En mode communication, le signal 62 est au potentiel *Vbatt* et le signal 63 de type PWM est directement appliqué à la grille du transistor 641.

L'intégrateur 60 permet donc d'obtenir un signal 44 carré et périodique consommant peu d'énergie qui est mis en forme par l'intégrateur 40 pour permettre une intensité de la LED 213 variant lentement que l'utilisateur peut facilement associer à un mode veille et qui est peu consommateur d'énergie.

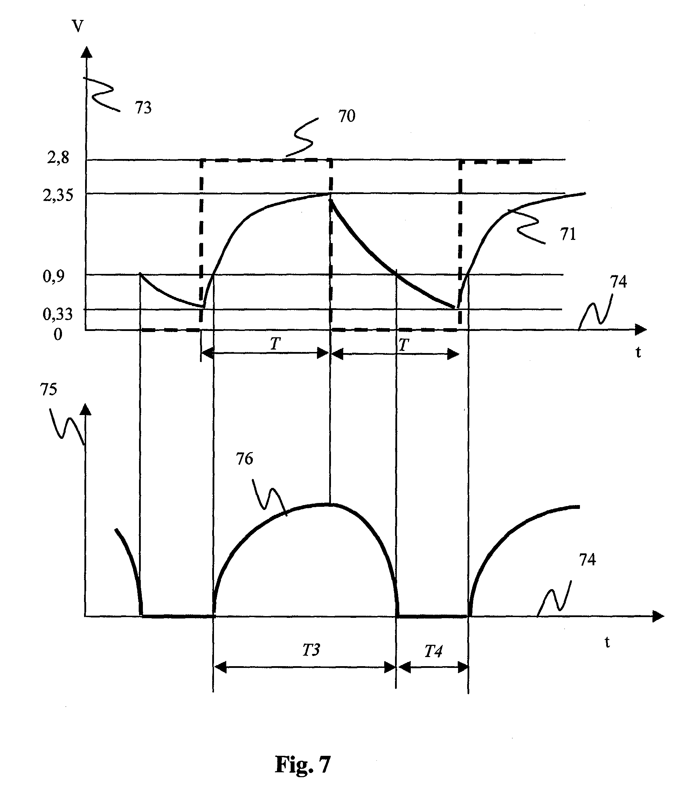

La **figure 7** illustre les amplitudes 73 de signaux présents dans le circuit de la figure 6 en fonction du temps 74 lorsque le signal 62 est relié à la tension *Vbatt.*

Plus précisément, les courbes 70, 71 et 76 illustrent respectivement les amplitudes des signaux 63, 61 et du signal de commande de la LED 213 lorsque le terminal 10 est en mode veille.

Le signal 63 représenté par la courbe 70 est un signal carré, périodique présentant, à chaque période, une tension nulle durant un temps *T* égal à 2,5 s et une tension égale à 2,8V (tension d'alimentation régulée) durant la même durée *T*.

Le signal 63 est intégré par l'intégrateur 60 (et plus précisément les résistances 603 (charge) et 604 (décharge) et la capacité 601) pour fournir le signal 61 représenté par la courbe 71. A chaque période, d'une durée 2*T*, le signal 71 qui est synchrone du signal 63 augmente progressivement d'une valeur basse égale à 0,33 mV à une valeur haute voisine de 2,35V durant la durée T puis diminue progressivement durant la même durée T de la valeur haute à la valeur basse.

Le signal de commande de la LED 213 représenté par la courbe 76 est représentatif de l'intensité lumineuse de la LED 213.

En mode veille établi, lorsque le signal 71 dépasse une tension seuil voisine de 0,9 V, le FET 211 devient passant et l'intensité de la LED augmente durant une durée *T3* puis diminue durant une durée *T4* progressivement en fonction de l'intensité du signal 71. Puis, lorsque le signal 71 passe sous la tension seuil, la LED s'éteint. Ce cycle se reproduit à chaque période T en mode veille.

Ainsi, la LED 213 clignote doucement avec une période égale de l'ordre de 5 s et l'utilisateur du terminal 10 perçoit de manière très ergonomique le mode veille.

Selon une variante de l'invention, en mode veille, les valeurs de résistances 603 et 604 ainsi que la valeur de la capacité du condensateur 602 peuvent être ajustées en fonction des temps désirés d'augmentation ou de diminution de l'intensité de la LED 213. Si les valeurs de résistance sont suffisament élevées, la LED 213 peut rester allumée continuellement.

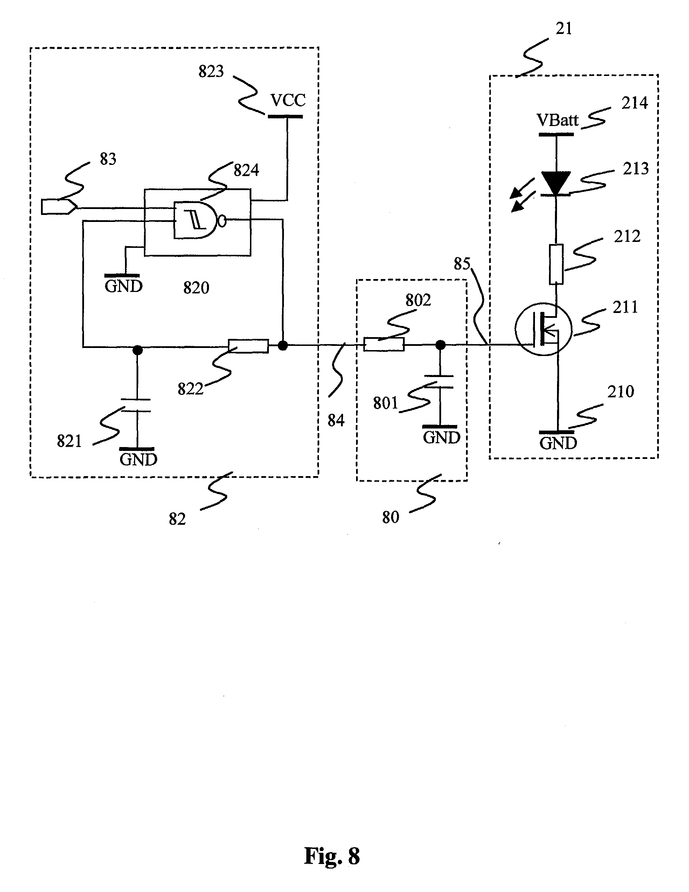

La **figure 8** présente un schéma électronique selon une autre variante de l'invention mise en oeuvre dans le terminal 10.

Les moyens de contrôle de la diode 11 comprennent notamment :
- un oscillateur 82 ;
- un intégrateur 80 ; et
- une unité 21 associée à une LED 213 similaire à l'unité qui porte les mêmes références en regard de la figure 2 et ne sera donc pas décrite davantage.

L'oscillateur 82 accepte en entrée un signal de commande 83 (signal d'activation (ou « trigger » en anglais) actif au niveau haut) et présente un signal de sortie 84. Il comprend notamment :
- une porte NAND à deux entrées 824 de type MC74VHC1C132, alimentée par une tension VCC 823 régulée, de l'ordre de 2,8 V et la masse 820 ;
- une résistance électrique 84 de 910 kΩ ; et
- un condensateur 821 de 4,7 µF.

La première et la seconde bornes d'entrée du composant 824 sont reliées respectivement au signal de commande 83 et à une borne du condensateur 821 (l'autre borne étant à la masse) elle-même reliée à une première borne de la résistance 822.

La sortie du composant 824 est connectée à une deuxième borne de la résistance 822 et fournit un signal 84.

L'intégrateur 80 accepte en entrée le signal de commande 84, présente en sortie un signal 85 et comprend :
- une résistance électrique 802 de 300kΩ reliée aux signaux 84 et 85 ; et
- un condensateur 801 de 2,2 µF dont l'une des bornes est reliée au signal 85 et l'autre borne est reliée à la masse.

La grille du transistor 211 à effet de champ est reliée au signal 85.

Ainsi, l'oscillateur 82 permet d'obtenir un signal 84 carré et périodique consommant peu d'énergie qui est mis en forme par l'intégrateur 80 pour permettre une intensité de la LED 213 variant lentement, que l'utilisateur peut facilement associer à un mode veille et qui est peu consommateur d'énergie.

Le dispositif de radiocommunication illustré en regard de la figure 8 permet d'obtenir des signaux similaires à ceux décrits en regard de la figure 3 (les signaux 30, 31 et 32 étant pris répectivement aux points 43, 45 et aux bornes de la LED 213).

Bien entendu, l'invention n'est pas limitée aux exemples de réalisation mentionnés ci-dessus.

En particulier, l'homme du métier pourra apporter toute variante dans le type de terminal qui possède au moins deux modes de fonctionnement (par exemple mode « en communication » et mode veille) et qui peut être de tout type associé un réseau et/ou une liaison de radiocommunication. D'autres modes de fonctionnement peuvent être associés à différents type de fréquence ou de luminosité de la source, par exemple, un mode associé à un type de communication (communication vocale, transmission de données) ou à un état du terminal (par exemple chargement de batterie...).

L'invention n'est pas limitée aux sources lumineuses de type comprenant une ou plusieurs LED mais s'étend à toute source utilisable sur un terminal de radiocommunication, et notamment à un écran ou une partie d'écran.

L'homme du métier pourra également apporter toute variante dans les moyens d'intégration (par exemple basés sur l'utilisation de circuits capacitifs et/ou de composants actifs), l'oscillateur et les moyens de conversion de tension vers courant alimentant la source lumineuse. En particulier, ces différents moyens peuvent être mis en oeuvre, selon l'invention, sous la forme de composants discrets et/ou de circuits intégrés. L'invention concerne également un circuit intégré mettant en oeuvre tout ou partie de ces moyens (notamment moyens d'intégration, oscillateur, moyens de conversion et source lumineuse).

Les signaux de contrôle ne sont pas limités aux modes de réalisation décrits mais s'étendent, selon l'invention, à tous signaux adaptés à contrôler une source lumineuse de terminal de radiocommunication, et comprenant, en particulier, un signal numérique sensiblement périodique alimentant des moyens d'intégration connectés à ladite source lumineuse. Selon l'invention, ce signal peut être quelconque (par exemple, de forme carrée, triangulaire) pour être adapté à l'effet lumineux voulu.

Des diodes électroluminescentes (ou LED) de types très variés sont compatibles avec l'invention. Selon l'invention, on peut notamment mettre en oeuvre de LED de différentes couleurs ou changeant de couleur en fonction du mode de communication par contrôle de l'amplitude des signaux de commande. La LED peut, selon différentes variantes de l'invention, clignoter à des instants différents, selon des fréquences ou rythmes très divers et/ou selon des variations d'intensité adaptés.

En outre, l'homme du métier pourra intégrer dans un ou plusieurs circuits intégrés (ou puces électroniques), les modes de réalisation décrits précédemment sous forme de composants discrets.

De plus, l'invention concerne tout type de dispositif de radiocommunications, notamment les terminaux de télécommunication mobiles (par exemple de type UMTS ou GSM), les terminaux de téléphonie sans fil (DECT en particulier), les terminaux de type PDA (de l'anglais « Personal Digital Assistant » ou « Assistant Numérique Personnel ») et également les composants (notamment circuits intégrés ou puces électroniques) ou cartes électroniques destinés à équiper de tels terminaux.

## Revendications

1. Dispositif de radiocommunication comprenant au moins une source lumineuse (11, 213) pour indiquer au moins deux états distincts dudit dispositif, et dont la luminosité varie selon des rythmes différents selon lesdits états,
**caractérisé en ce que**, dans au moins un premier desdits états, ladite source lumineuse est contrôlée par un signal numérique (30, 70) sensiblement périodique alimentant des moyens d'intégration (200, 201, 202, 54, 601, 602, 603, 604, 80, 82) connectés à ladite source lumineuse.

2. Dispositif de radiocommunication selon la revendication 1, **caractérisé en ce que** ledit premier état est un état de veille, nécessitant une faible consommation d'énergie.

3. Dispositif de radiocommunication selon l'une quelconque des revendications 1 et 2, **caractérisé en ce que** ledit signal numérique sensiblement périodique est un signal carré.

4. Dispositif de radiocommunication selon la revendication 3, **caractérisé en ce que** ledit signal numérique change de valeur à chaque activation d'un réveil associé à un traitement effectué durant le mode veille.

5. Dispositif de radiocommunication selon la revendication 4, **caractérisé en ce que** ledit réveil est associé à un signal de « paging » reçu par ledit dispositif, lorsqu'il est en veille.

6. Dispositif de radiocommunication selon l'une quelconque des revendications 1 à 5, **caractérisé en ce que** lesdits moyens d'intégration comprennent au moins une résistance (202, 603, 604, 802) et au moins une capacité (201, 602, 801) formant un intégrateur.

7. Dispositif de radiocommunication selon la revendication 6, **caractérisé en ce que** lesdits moyens d'intégration comprennent deux circuits montés en parallèle comprenant chacun au moins une résistance ( 603, 604) et au moins une diode (605, 606), lesdites diodes étant montées en sens opposés dans lesdits circuits, lesdits circuits et au moins une capacité (602) formant un intégrateur.

8. Dispositif de radiocommunication selon l'une quelconque des revendications 1 à 7, **caractérisé en ce que** la période dudit signal numérique est supérieure ou égale à deux secondes.

9. Dispositif de radiocommunication selon l'une quelconque des revendications 1 à 8, **caractérisé en ce que** lesdits moyens d'intégration alimentent des moyens de conversion (211, 212, 641)d'une tension en courant d'alimentation de ladite source lumineuse.

10. Dispositif de radiocommunication selon la revendication 9, **caractérisé en ce qu'**un transistor à effet de champ (211, 641) et une résistance (212) associée forment lesdits moyens de conversion.

11. Dispositif de radiocommunication selon l'une quelconque des revendications 1 à 10, **caractérisé en ce que** ladite source lumineuse comprend au moins une diode électroluminescente (213).

12. Dispositif de radiocommunication selon l'une quelconque des revendications 1 à 11, **caractérisé en ce que**, dans au moins un second état, ladite source est contrôlée par des moyens de modulation de largeur d'impulsion (23, 55,63).

13. Dispositif de radiocommunication selon la revendication 12, **caractérisé en ce que** ledit signal numérique régulier et un signal pour ladite modulation de largeur d'impulsion sont multiplexés sur une même entrée (23, 63).

14. Dispositif de radiocommunication selon l'une quelconque des revendications 1 à 13, **caractérisé en ce que** lorsque l'on passe dans un état où lesdits moyens d'intégration ne sont pas utilisés, ces derniers sont isolés de la masse à l'aide d'un transistor (203, 54, 601).

15. Dispositif de radiocommunication selon l'une quelconque des revendications 1 à 14, **caractérisé en ce qu'**il comprend au moins deux moyens d'intégration utilisables sélectivement, et/ou des moyens d'intégration programmables, de façon à modifier le rythme de variation de la luminosité.
